# EUROPEAN PATENT APPLICATION

(11) **EP 2 189 867 A1**
(43) Date of publication of application: **26.05.2010**
(21) Application number: 08020251.8
(22) Date of filing: 20.11.2008
(51) Int. Cl.: G05D 1/00, A61G 3/00, A61G 5/04

(54) **A seat aligning sensing and safeguarding mechanism of electric scooter cart**

(71) Applicant: Chen, Yung-Cheng, Jhongli City T'ao yuan County (TW)
(72) Inventor: Chen, Yung-Cheng, Jhongli City T'ao yuan County (TW)
(74) Representative: Volpert, Marcus

(57) **Abstract**

The present invention provides a seat aligning sensing and safeguarding mechanism of an electric scooter cart, wherein the seat is assembled rotarily via the chassis onto the top of a column on the main body of the electric scooter cart; the present invention is **characterized in that**, the first and second sensors are arranged correspondingly between the top of the column and the chassis of the seat; the first sensor on the column is electrically connected with a controller, which can control on/off state of the drive motor of the electric scooter cart according to the sensing signal of the first sensor; with this design, when the seat of the electric scooter cart isn't realigned, the electric scooter cart cannot be activated, thereby improving the operational safety of the electric scooter cart with better applicability.

## Description

### BACKGROUND OF INVENTION

### 1. Field of the Invention

The present invention relates generally to an electric scooter cart, and more particularly to an innovative one which is designed with an aligning sensing and safeguarding mechanism for the seat.

### 2. Description of Related Art

The existing electric scooter cart is structurally designed in such a manner that the seat is generally provided with rotary angles in order to make the physically disabled or aged drivers get on/off the cart more conveniently; when a driver is intended for getting on/off the cart, the seat could be rotated 90° for facing laterally; or when a driver is intended for driving the cart, the seat could be readjusted and realigned to make the driver face the front of the cart and control correctly the driving direction.

However, due to the delayed reaction of the physically disabled or aged drivers, it is possible for them to trigger the throttle's deflector rod and activate the electric scooter cart by mistake when the seat isn't yet realigned, or any consequence or unexpected accident may occur due to their oblique gesture in sitting.

Thus, to overcome the aforementioned problems of the prior art, it would be an advancement if the art to provide an improved structure that can significantly improve the efficacy.

Therefore, the inventor has provided the present invention of practicability after deliberate design and evaluation based on years of experiences in the production, development and design of related products.

### SUMMARY OF THE INVENTION

Based on the unique design of the present invention that "the seat aligning sensing and safeguarding mechanism of electric scooter cart" permits the first and second sensors to be arranged correspondingly between the top of the column and the chassis of the seat; the first sensor is electrically connected with a controller, which can control on/off state of the drive motor of the electric scooter cart according to the sensing signal of the first sensor. As compared with [prior art], when the seat of the electric scooter cart of the present invention isn't realigned, the electric scooter cart cannot be activated, helping to prevent any unexpected hazard, and further improve the operational safety of the electric scooter cart with better applicability.
Although the invention has been explained in relation to its preferred embodiment, it is to be understood that many other possible modifications and variations can be made without departing from the spirit and scope of the invention as hereinafter claimed.

### BRIEF DESCRIPTION OF THE DRAWINGS

FIG. 1 shows a perspective view of the present invention (the seat is separated from the column).
FIG. 2 shows a partial perspective view of the present invention.
FIG. 3 shows a view of the present invention that the controller, magnetic reed switch and drive motor are electrically connected.
FIG. 4 shows a plane view of the present invention that the seat is under an aligning state.
FIG. 5 shows a plane view of the present invention that the seat is under a deviation state.

### DETAILED DESCRIPTION OF THE INVENTION

The features and the advantages of the present invention will be more readily understood upon a thoughtful deliberation of the following detailed description of a preferred embodiment of the present invention with reference to the accompanying drawings.

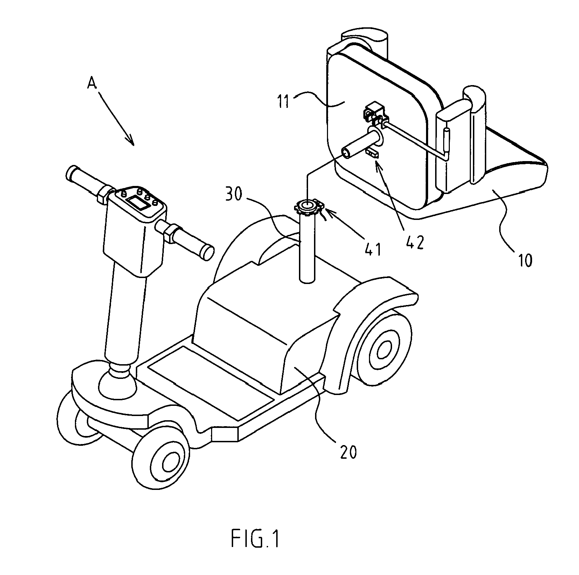

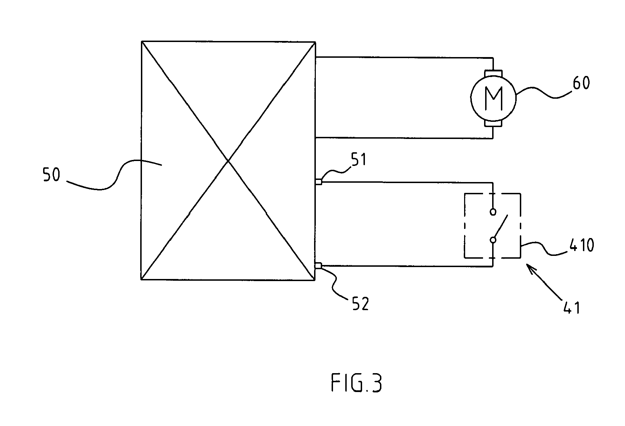

FIGS. 1∼3 depict preferred embodiments of seat aligning sensing and safeguarding mechanism of electric scooter cart of the present invention, which, however, are provided for only explanatory objective for patent claims. The seat 10 of electric scooter cart A is assembled rotarily via the chassis 11 onto the top of a column 30 on the main body 20 of the electric scooter cart A; a first sensor 41 and a second sensor 42 are arranged correspondingly between the top of column 30 and the chassis 11 of the seat 10; the first sensor 41 on the top of column 30 is electrically connected with a controller 50, so as to transmit signals to the controller 50 according to the sensing state; meanwhile, the controller 50 can control on/off state of the drive motor 60 of the electric scooter cart A (shown in FIG. 3) according to the sensing signal of the first sensor 41.

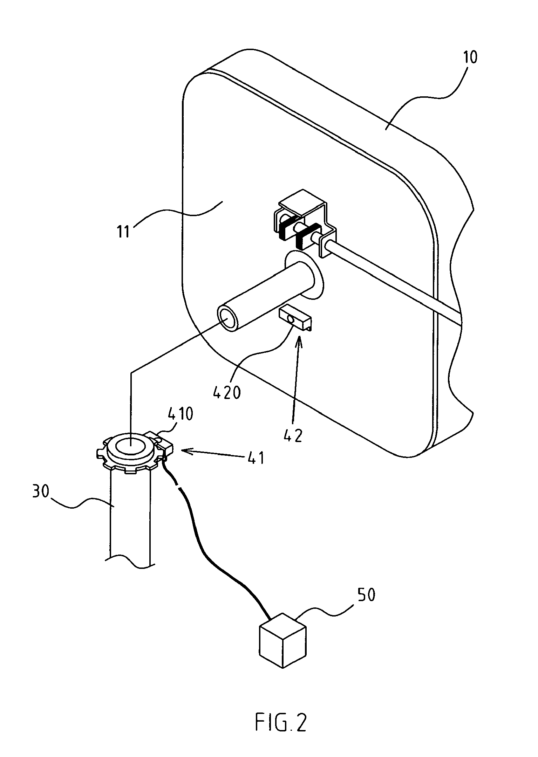

Referring to FIG. 2, the first sensor 41 is made of a magnetic reed switch 410, and the second sensor 42 made of an induced magnet 420; the controller 50 (shown in FIG. 3) is provided with a signal contact 51 and earthing end 52, such that the magnetic reed switch 410 is wired to the signal contact 51 and earthing end 52 of the controller 50.

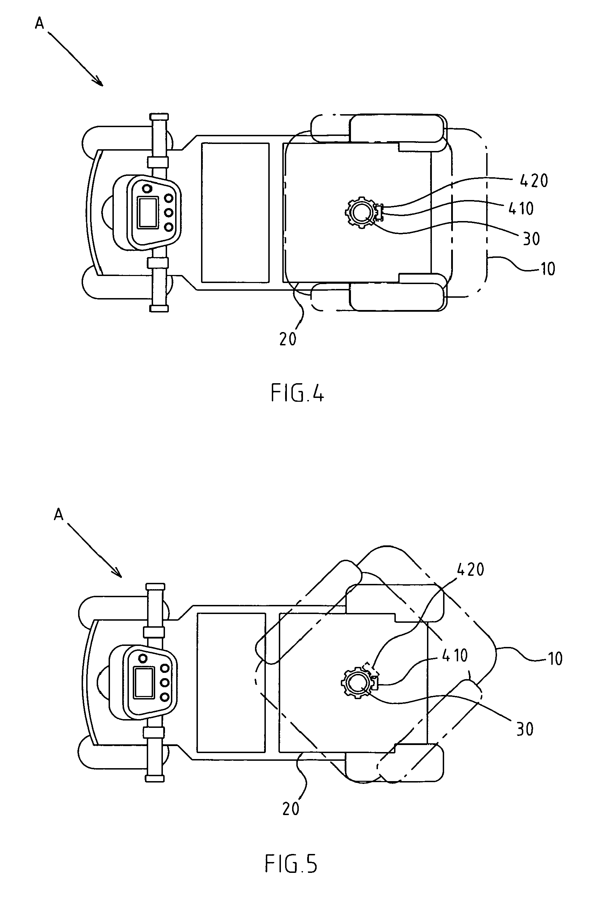

Based on the aforementioned structural design, the seat aligning sensing and safeguarding mechanism of electric scooter cart A of the present invention is operated as shown in FIG. 4; when the seat 10 of the electric scooter cart A is under a preset positive angle (i.e. facing the cart head), the magnetic reed switch 410 is aligned with the induced magnet 420, and then induced by the magnet into an open-circuit state; in such case, the electronic signal of the controller 50 is high, representing normal starting state of the electric scooter cart A; when the seat 10 is deviated (shown in FIG. 5), the magnetic reed switch 410 is misaligned with the induced magnet 420, so the magnetic reed switch 410 is under a closed circuit state, and the signal of the controller 50 turns from high to low; furthermore, the drive motor 60 is turned off to disable the electric scooter cart A; if users intend to resume the normal driving state, it is required to realign the seat 10 and reset the drive motor 60 without need of turning-on the power switch.

The deviation angle of the seat 10 is set as 15°; if this angle is exceeded, the motor control system will be cut off automatically, so that the motor of electric scooter cart A will be turned off immediately to avoid error triggering of the throttle; when the seat is realigned, the driver is allowed for normal operation with the throttle.

## Claims

1. A seat aligning sensing and safeguarding mechanism of electric scooter cart, comprising:
a column, protruded on the main body of an electric scooter cart;
a seat, containing a chassis, which is assembled rotarily on the top of the column;
a first sensor, which is placed on top of the column;
a second sensor, which is arranged on the chassis of the seat; the second sensor is aligned or misaligned with the first sensor depending o the rotation angle of the seat;
a controller, which is electrically connected with the first sensor;
the controller can control on/off state of the drive motor of the electric scooter cart A according to the sensing signal of the first sensor.

2. The structure defined in Claim 1, wherein the first sensor is made of a magnetic reed switch, and the second sensor made of an induced magnet; the controller is provided with a signal contact and earthing end, such that the magnetic reed switch is wired to the signal contact and earthing end of the controller; when the seat is under a preset positive angle, the magnetic reed switch is aligned with the induced magnet, and then induced by the magnet into an open-circuit state; when the seat is deviated, the magnetic reed switch is misaligned with the induced magnet, so the magnetic reed switch is under a closed circuit state, and the signal of the controller turns from high to low; furthermore, the drive motor is turned off to disable the electric scooter cart.
